# EUROPEAN PATENT APPLICATION

(11) **EP 1 106 653 A2**
(43) Date of publication of application: **13.06.2001**
(21) Application number: 00310195.3
(22) Date of filing: 16.11.2000
(51) Int. Cl.: C08L 83/04, C08K 3/22, C08K 3/30, C08K 3/00

(54) **Method for photocuring polyorganosiloxane and polysiloxane composition for optical use**

(30) Priority: 19.11.1999 JP 32986099; 19.11.1999 JP 32990199
(71) Applicant: Dow Corning Asia, Ltd., Tokyo 100 (JP)
(72) Inventor: Kushibiki, Nobuo, Dow Corning Asia, Ltd., Chiyoda-ku, Tokyo 100 (JP); Takeuchi, Kikuko, Dow Corning Asia, Ltd., Chiyoda-ku, Tokyo 100 (JP)
(74) Representative: Hall, Marina

(57) **Abstract**

This invention relates to a method for photocuring a polysiloxane comprising mixing n-type optical semiconductor particles with the polysiloxane which is cross-linkable by a condensation reaction between silanol groups and cross-linking the polysiloxane by irradiating with light possessing energy equal to or greater than the bandgap energy of the optical semiconductor particles. This invention also relates to a method for making a cured polysiloxane composition for optical use having no specific light absorption band in the visible light range comprising mixing n-type optical semiconductor particles having a bandgap energy corresponding to the energy of light with a wavelength shorter than 400 nm with a polysiloxane cross-linkable by a condensation reaction between silanol groups and cross-linking the polysiloxane by irradiating with light of energy equal to, or greater than, the bandgap energy of the optical semiconductor particles.

## Description

The present invention relates to a novel method for photocuring, which can be applied to polysiloxanes to be used for a variety of applications such as curable silicone compositions, silicone coating agents, and also to a cured polysiloxane composition for optical use that can be used in applications such as optical elements and optical thin films. More specifically, it relates to a photocured polysiloxane composition for optical use having no specific light absorption band in the visible light range.

Polysiloxane resins are well known as optically transparent resins. When using polysiloxane resins, they are often cross-linked in order to give them better strength. Common curing methods used for polysiloxane resins include a process in which residual silanol groups in a polysiloxane are caused to undergo condensation by dehydration by adding an appropriate catalyst, a process in which more easily eliminated groups, for example, oxime groups, are substituted for silanol groups and caused to undergo condensation by heating, or a process in which vinyl groups and SiH groups are introduced into polysiloxane(s) in advance and then cross-linked by a hydrosilation addition reaction by adding a platinum catalyst or a peroxide catalyst.

In addition, to meet the demand for low-temperature curing or high-speed curing various methods are being investigated, in which photoreactivity is imparted to a polysiloxane by modification with various photofunctional groups in order to cure it by means of irradiation with light. Many photocurable polysiloxane resins of this type are developed by introducing photofunctional groups already known to be used in photocurable organic resins into a polysiloxane as photofunctional groups. Acrylic groups, methacrylic groups, and epoxy groups are suggested as examples of such photofunctional groups. In addition, appropriate curing catalysts and sensitizers are used depending on the type of the photofunctional groups.

Japanese Laid-Open Patent Application No. Hei 08(1996)-165113 discloses a process in which a siliceous coating film is formed on the surface of oxide semiconductor particles by chemically adsorbing a silane compound or a siloxane compound on the surface of the oxide semiconductor particles and reacting OH groups on the surface of the oxide semiconductor particles with OH groups in the aforementioned silane or siloxane compound by irradiating the+ surface with light.

Japanese Laid-Open Patent Application No. Hei 04(1992)-040229 discloses a dispersion obtained by dispersing microparticles of an optical semiconductor in a cyclic organosiloxane solution is irradiated with light of a wavelength having energy equal to, or greater than, the bandgap of the semiconductor so as to coat the surface of the fine particles with siloxane polymer. It is assumed that the formation of the polymer is due to the fact that ring-opening polymerization takes place on the surface of the semiconductor microparticles when positive holes generated in the valence electron band by the bandgap excitation of the semiconductor oxidize the cyclic organosiloxane.

The two above-described documents mention neither a condensation reaction between silanol groups in an organosilicon compound, nor a cross-linking reaction in a siloxane based on such a reaction.

Japanese Laid-Open Patent Application No. Hei 10(1998)-296185 discloses (1) a product of hydrolysis and polycondensation of a silane (the silane may additionally contain colloidal silica) having OR¹ groups (in which R¹ stands for a monovalent hydrocarbon group), or (2) a silica-dispersed oligomer solution of an organosilane obtained by partially hydrolyzing a hydrolyzable organosilane and colloidal silica in the presence of water; and a solution of a polyorganosiloxane having silanol groups in the molecule are mixed with an optical semiconductor serving as a curing catalyst, coated onto a substrate, and cured over a period of several days at a low temperature of 100°C or less. This document does not mention the idea of promoting the cure of the above-mentioned coating film by irradiating the film with light. As disclosed in the patent, the above-mentioned optical semiconductor is used to provide a bactericidal action and an air-purifying action.

Japanese Laid-Open Patent Application No. Hei 10(1998)-146251 discloses a coating composition which is obtained by dispersing particles of a photocatalyst (an optical semiconductor) such as titanium oxide in a coating film-forming component consisting of a silicone or a silicone precursor which is coated onto the surface of a substrate and after heat curing the coating film-forming component hydroxyl groups are substituted for organic groups bonded to the silicon atoms of the aforementioned silicone molecules by exciting the aforementioned optical semiconductor by means of irradiation with UV radiation. This document mentions neither a condensation reaction between silanol groups in an organosilicon compound nor a cross-linking reaction in a siloxane based on such a reaction.

Japanese Laid-Open Patent No. Hei 09(1997)-038191 and U.S. Patent No. 5,919,422 disclose titanium dioxide which serves as an optical catalyst (an optical semiconductor) when adhered to a sheet main body using silicone resin as a binder and bacteria are killed and odors are eliminated by irradiating it with UV radiation. The documents mention neither a condensation reaction between silanol groups in an organosilicon compound nor a cross-linking reaction in a siloxane based on such a reaction.

With regard to the photocatalytic functions of TiO₂, it is mentioned in "TiO₂ PHOTOCATALYSIS Fundamentals and Applications" (Akira Fujishima, Kazuhito Hashimoto, Toshiya Watanabe, 1999, by BKC Inc.), on pp. 14∼21, that it possesses, for example, water-purifying effects, anti-cancer effects, deodorant effects, anti-fouling effects, anti-bacterial effects, and anti-fogging effects; but no effects pertaining to a curing catalyst, in particular a photocuring catalyst are mentioned.

Because many sensitizers and curing catalysts have a light absorption band in the range from the near UV range to the visible light range, when such sensitizers, curing catalysts, or substances derived therefrom remain as residues in polysiloxane after cross-linking by a photocuring reaction they may cause optically undesirable effects to the polysiloxane due to absorption in the visible light range or sometimes act as a factor in the degradation of the polysiloxane. If it were possible to photocure a polysiloxane having no specific photofunctional organic groups without using such sensitizers and curing catalysts, then it would be possible to obtain a polysiloxane suitable for optical use in which the characteristics such as transparency, water repellency, lower surface energy, etc. possessed by the polysiloxane would not be impaired. An objective of the present invention is to provide a method for photocuring polysiloxanes on which specific photofunctional groups are not introduced. Another objective of the present invention is to provide a cured polysiloxane composition for optical use having no specific light absorption band in the visible light range and in which a polysiloxane obtained without introducing specific photofunctional groups onto the polysiloxane used as the raw material.

One aspect of the present invention is a method for photocuring a polysiloxane comprising mixing an n-type optical semiconductor particle with a polysiloxane, which is cross-linkable by a condensation reaction between silanol groups, and cross-linking the polysiloxane by irradiating with light possessing energy equal to or greater than the bandgap energy of the optical semiconductor.

Another aspect of the present invention is a method for making a cured polysiloxane composition for optical use having no specific light absorption band in the visible light range comprising mixing n-type optical semiconductor particles whose bandgap energy corresponds to a wavelength of 400 nm or less with a polysiloxane cross-linkable by a condensation reaction between silanol groups and cross-linking the polysiloxane by irradiating with light of a wavelength possessing energy equal to or greater than the bandgap energy of the optical semiconductor; and the cured composition prepared thereby.

It is desirable to use the n-type optical semiconductor possessing the bandgap energy corresponding to the energy of light with the wavelength in the range of from 250 nm to 800 nm (both inclusive), but if the polysiloxane which is suitable for optical use, is desirably obtained, the n-type optical semiconductor is limited to one which possesses the bandgap energy corresponding to the energy of light with a wavelength shorter than 400 nm

### DESCRIPTION OF INVENTION

As one aspect, the present invention is a method for photocuring a polysiloxane comprising mixing an n-type optical semiconductor particle with a polysiloxane, which is cross-linkable by a condensation reaction between silanol groups, and cross-linking the polysiloxane by irradiating with light possessing energy equal to or greater than the bandgap energy of the optical semiconductor.

As another aspect, the present invention is a method for a making a cured polysiloxane composition for optical use having no specific light absorption band in the visible light comprising mixing n-type optical semiconductor particles whose bandgap energy corresponds to a wavelength of 400 nm or less with a polysiloxane cross-linkable by a condensation reaction between silanol groups and cross-linking the polysiloxane by irradiating with light of a wavelength possessing energy equal to or greater than the bandgap energy of the optical semiconductor; and the cured composition prepared thereby.

Reactions induced by irradiating an n-type optical semiconductor with light of a wavelength corresponding to the bandgap energy of the semiconductor are known as optical semiconductor electrode reactions or simply as optical semiconductor reactions. In such reactions, due to the photo-excitation of the optical semiconductor, some electrons in the valence band are excited and promoted to the conduction band, reacting with the ambient hydrogen ions, while positive holes in the valence band react with hydroxide ions, forming hydrogen atoms and hydroxyl radicals. Hydrogen and oxygen are generated in such reactions. This phenomenon first attracted attention as a process for converting optical energy into chemical energy, and numerous studies have been conducted since then. It is known that when organic compounds are present in water decomposition of the organic compounds takes place and the compounds ultimately decomposing into carbon dioxide, hydrogen, and oxygen. The reaction of decomposition of organic compounds is explained as being driven mainly by hydroxyl radicals. This technology has also attracted attention in recent years as a water purification process and as a technique for decomposing contaminant substances adhered to the surface of equipment or materials.

The present invention relates to a method for photocuring a polysiloxane by mixing n-type optical semiconductor particles with a polysiloxane which is cross-linkable by a condensation reaction between silanol groups and using a reaction induced by irradiating it with light of a wavelength corresponding to the bandgap energy of the optical semiconductor, and also a cured polysiloxane composition for optical use obtained by mixing n-type optical semiconductor particles with a polysiloxane and cross-linking the polysiloxane using a reaction induced by irradiating it with light of a wavelength corresponding to the bandgap energy of the optical semiconductor. At present, the mechanism of the cross-linking reaction induced by the photo-excitation of the optical semiconductor to cross-link the polysiloxane is not clear. Among methods for cross-linking the polysiloxane which contains silanol groups formed at the time of production, not depending on irradiation with light, there is a process in which the silanol groups are subjected to dehydrocondensation. The same explanation may be given to this case that as water acts on the dehydrocondensation, electrons and positive holes from the semiconductor act on the silanol groups to induce the dehydration reaction and to cross-link the polysiloxane. It may be proofed by the fact that when titanium oxide, which is an n-type optical semiconductor, is mixed with a polysiloxane containing silanol groups in the molecule and the mixture is irradiated with light the polysiloxane undergoes cross-linking and a reduction in the number of silanol groups is observed. Alternatively, another possible explanation is that based on the same mechanism as that of organic compound decomposition, where decomposition proceeds via a radical chain reaction in which hydroxyl radicals pull hydrogen from organic molecules and radicals are produced in polysiloxane via hydrogen extraction from organosilicon molecules and cross-linking takes place as a result of bonding between the radicals. In any case, it is possible to cross-link polysiloxanes having absolutely no photofunctional groups, such as epoxy groups, acryl groups, or other groups, which were introduced into prior photocurable polysiloxanes.

There is no in particular additional limitation to the polysiloxane of the present invention, if it is the polysiloxane that may be cross-linkable by a condensation reaction between silanol groups. The polysiloxane is exemplified by silicone resins or silicone fluids having silanol groups at the terminal end and/or side end. Considering the curability and strength/characteristics of the cured composition needed for various optical uses, a silicone resin is preferably selected. Examples of polysiloxanes used in the present invention include polysiloxanes produced from bifunctional organosilicon compounds, polysiloxanes produced from trifunctional organosilicon compounds and polysiloxanes that are copolymers of organosilicon compounds with different numbers of functional groups (for example, polysiloxanes prepared from monofunctional organosilicon compounds and tetrafunctional organosilicon compounds and polysiloxanes prepared from trifunctional organosilicon compounds and bifunctional organosilicon compounds).

Generally speaking, polysiloxanes are known to have silanol groups due to the raw materials and the production processes used (Japanese Laid-Open Patent Application No. Sho 55(1980)-048245). The polysiloxanes used in the present invention are no exception, and typically contain from 0.1 wt% to 10 wt% of silanol groups (based on OH groups) per 100 g. In addition, polysiloxanes in which silanol groups were blocked are applicable in the present invention, so long as silanol is introduced using known methods.

Saturated aliphatic hydrocarbon groups having 1 to 18 carbon atoms (for example, methyl, ethyl, propyl, butyl, and hexyl), halogen-substituted hydrocarbon groups having 1 to 18 carbon atoms (including perfluoro hydrocarbon groups), unsaturated aliphatic hydrocarbon groups (for example vinyl), and aromatic hydrocarbon groups (for example, phenyl, tolyl, and xylyl) are suggested as the substituent groups contained in the polysiloxanes.

Polysiloxanes that are soluble in organic solvents or are liquid at temperatures equal to, or lower than the temperature, at which dehydrocondensation occurs, are preferable among the above-mentioned polysiloxanes. This is simply a matter of convenience in mixing the n-type optical semiconductor particles with the polysiloxane because if the polysiloxane is not liquid or soluble in solvents as described above mixing presents difficulties. In the present invention, the polysiloxane may be one which obtained by addition of a silane compound containing hydrolyzable functional groups to a solution of colloidal silica dispersed therein, and hydrolysis/condensation by addition of water in small amount.

N-type optical semiconductor particle is preferably one which may be excited in an efficient manner without exciting the silicon atom of the polysiloxane, since the mixture of n-type optical semiconductor particle and polysiloxane is irradiated with light in the present invention. For this reason it is recommended to select a semiconductor having bandgap energy variable, depending on a form of the substituent group bonded to silicon atom of the polysiloxane. For example when the substituent groups attached to the silicon atoms of the polysiloxane are methyl groups, the excitation wavelength of the n-type optical semiconductor should preferably be a wavelength of not less than 280 nm. In same manner when the substituent group attached to the silicon atoms are phenyl groups, a wavelength of not less than 310 nm is preferable. Therefore n-type optical semiconductor to be employed in the present invention are well known as follows:

| | |
|---|---|
| Anatase type TiO2 | (3.2 eV, 385 nm) |
| Rutile type TiO2 | (3.0 eV, 415 nm) |
| SrTiO3 | (3.2 eV, 385 nm) |
| CdS | (2.4 eV, 520 nm) |
| ZnO | (3.2 eV, 385 nm) |
| SnO | (3.7 eV, 335 nm) |

Method for photocuring of the present invention is described below. It is below illustrated as example where the polysiloxane is soluble in a solvent. The polysiloxane is dissolved in the solvent, and n-type optical semiconductor particle is admixed thereto and sufficiently dispersed. The n-type optical semiconductor in form of powder is preferable. In general, the particle size thereof is not preferably more than 80 nm, varying depending on form of the semiconductor, i.e. excitation wavelength. As almost of the optical semiconductor particles has higher refractive index than the polysiloxane, reflection is observed on the surface of the particle. Therefore the polysiloxane containing the n-type optical semiconductor particle becomes opaque due to scattering of light therein, but this is not critical in the photocuring process of the present invention. The quantity of the n-type optical semiconductor particle admixed is preferably selected from the range of from 0.1 percent by weight to 50 percents by weight per 100 percent by weight of the polysiloxane, so far as the particle does not alter properties of the polysiloxane after cured and the residual particle does not adversely effect. The mixture of the n-type optical semiconductor and the polysiloxane is either coated onto the substrate or poured in a mold. At this point, if necessary, drying treatment is carried out. In particular when the raw materials are mixed by dissolving them in a solvent, or when the raw materials contain moisture, the drying treatment is carried out in order to remove them or reduce their content. As far as the method of drying is concerned, any means are suitable so long as it is possible to remove the solvents and moisture.

Finally, the aforementioned mixture which has been applied as a coating or placed in a mold is irradiated with light possessing energy equal to or greater than bandgap energy of the n-type optical semiconductor particles. Because the duration of irradiation depends on the distance from the optical source to the aforementioned mixture applied as a coating or placed in a mold, or the energy level of the light, as well as the target hardness, it cannot be defined in a generic manner.

In another aspect of the present invention, which relates to a method for making a cured polysiloxane composition for optical use that can be used in the visible light range, suitable n-type optical semiconductor particles are limited to particles excitable by light with a wavelength shorter than 400 nm. When n-type optical semiconductor particles excitable by light with a wavelength longer than 400 nm are employed in the present invention, the resultant polysiloxane composition, due to the absorption which the n-type optical semiconductor particles exhibit in the visible light range, suffers from various problems such as discoloration and possible degradation by visible light.

In the method for making the cured polysiloxane composition, there is a limitation to the n-type optical semiconductor particle, which is excitable by light with a wavelength longer than 400 nm. Some examples of the bandgap energies and excitation wavelengths of n-type optical semiconductor particles suitable for use in the present invention are SnO₂ (3.7 eV, 335 nm), SrTiO₃ (3.2 eV, 385 nm), ZnO (3.2 eV, 385 nm), and anatase type TiO₂ (3.2 eV, 385 nm).

To make the cured polysiloxane composition for optical use, other factors that affect optical characteristics include scattering. In order to provide good transmittance at 400 nm, the particle size of the n-type optical semiconductor particles should not be more than 1/5 of the wavelength, which is why the particle size of the n-type optical semiconductor particles must not be larger than 80 nm. In addition when the n-type optical semiconductor particles are nanosize, quantum effects may occur and, for this reason, even though the catalytic function might be further improved by using n-type optical semiconductor particles of an even smaller diameter, the particle size of the n-type optical semiconductor particles should preferably be not less than about 10 nm in order to form a geometrical optical element.

The process for preparing the cured polysiloxane composition for optical use of the present invention is explained hereinbelow. A powder of n-type optical semiconductor particles with a particle size of not larger than 80 nm is added to and dispersed in an uncured polysiloxane, or a polysiloxane dissolved in a solvent. In order to maintain excellent transmittance in the visible light range, ideally, the quantity of the added n-type optical semiconductor particles should be within the range of from 0.1 parts by weight to 10 parts by weight per 100 parts by weight of the polysiloxane. The dispersion is either coated onto the substrate or poured in a mold. At this point, if necessary, drying treatment is carried out. In particular when the raw materials are mixed by dissolving them in a solvent, or when the raw materials contain moisture, the drying treatment is carried out in order to remove them or reduce their content. As far as the method of drying is concerned, any means are suitable so long as it is possible to remove the solvents and moisture.

Finally, the aforementioned mixture which has been applied as a coating or placed in a mold to make the cured polysiloxane composition for optical use is irradiated with light possessing energy capable of exciting the n-type optical semiconductor particles, and preferably with light in the wavelength range of from 280 nm to 400 nm. Because the duration of irradiation depends on the distance from the optical source to the aforementioned mixture applied as a coating or placed in a mold, on the energy level of the light, as well as the target hardness, it cannot be defined in a generic manner. As a result a cured polysiloxane composition for optical use is obtained that belongs to the condensation type but at the same time possesses excellent transmittance in the visible light range.

As has been described in the present specification, the method of the present invention comprises mixing n-type optical semiconductor particles with a polysiloxane cross-linkable by a condensation reaction between silanol groups and cross-linking the polysiloxane by irradiating with light of energy equal to or greater than the bandgap energy of the optical semiconductor particles (in case the cured polysiloxane composition for optical use the n-type optical semiconductor particle has a bandgap energy corresponding to the energy of light with a wavelength shorter than 400 nm). Although in this process it is essential that the polysiloxane should be irradiated with light of a specified energy to cross-link it, this method may be used in combination with any other suitable cross-linking methods.

Processes commonly used for cross-linking polysiloxane in the silicone industry include a process in which a polysiloxane containing vinyl groups in the molecule and a polysiloxane containing SiH groups are mixed and subjected to a hydrosilation addition reaction and a process in which cross-linking is carried out by means of a condensation reaction of a polysiloxane having silanol groups or other condensable hydrolyzable groups.

In the method of the present invention the effects of the present invention are not impaired by the combined use of those prior art cross-linking process with the cross-linking process by irradiation with light. As an example of the combined use of the aforementioned hydrosilation reaction and cross-linking based on irradiation with light, one may suggest applying an addition reaction and cross-linking based on irradiation with light to a mixed system consisting of a polysiloxane containing vinyl groups and silanol groups and a polysiloxane containing SiH groups and silanol groups. This is based on the fact that the n-type optical semiconductor particles employed in the present invention usually do not impede the hydrosilation reaction. In addition the aforementioned condensation reaction with hydrolysis and condensation and cross-linking by means of irradiation with light of a polysiloxane having hydrolyzable groups and silanol groups may both be conducted. In this case the n-type optical semiconductor particles usually do not impede the reaction of hydrolysis and condensation.

Known platinum catalysts can be used in the above-mentioned hydrosilation reaction. In addition, known condensation catalysts can be used in the condensation reaction. Tin compounds (for instance, dibutyltin dilaurate), titanium compounds (tetrapropoxy titanium), fatty acid salts of metals (examples of metals: Pb, Zn, Fe, Zr, Co), and amino-containing compounds are suggested as examples of condensation catalyst. However, the catalysts are not limited to the above.

The method of the present invention enables a polysiloxane free of specific photofunctional group to be cured at lower temperature. The method of the present invention, which is different from photo-curing process of conventional photo-curable polysiloxane, lets a polysiloxane cure with irradiation of light without altering characteristics of the polysiloxane (e.g. surface tension, transparency, etc.). Therefore it is useful for various coatings such as release coating, water repellent coating and the like, which needs low surface energy characteristic, and for producing optical material which needs transparency of the polysiloxane. In addition the method of the present invention does not need prior-treatment (e.g. coverage of protective film to remove oxygen) required for conventional photo-curing process with use of peroxide, and it may be cured at atmosphere, so it can largely save manufacturing process steps.

In addition, in the preparation of the present cured polysiloxane composition for optical use one may first carry out either polysiloxane cross-linking by means of irradiation with light or polysiloxane cross-linking based on other methods, or carry them out simultaneously. However for best optical quality it is preferable to first carry out irradiation with light in order to partially cross-link the polysiloxane and then use other methods to cross-link, in particular methods involving heating. The reason for this is that the strain induced by the irradiation-based cross-linking tends to be relieved by heating.

### Examples

The present invention will now be further explained by referring to application examples. The present invention, however, is not limited by them.

The polysiloxanes that were used in examples are the following compounds 1-4.
1. Polymethylsiloxane - Dow Corning ® SR 2400 Resin from Dow Corning Toray Silicone Co., Ltd.
2. Polyphenylsiloxane - Dow Corning ® 840 Resin
3. Polymethyl/dimethylsiloxane resin (synthesized in accordance with the process disclosed in Japanese Laid-Open Patent Application No. Hei 11(1999)-021353) as described in Reference Example 1, below.
4. Methylpolysiloxane/colloidal silica (synthesized in accordance with the process disclosed in Japanese Patent Publication No. S52(1977)-39691, except that methyltriethoxysilane was substituted for methyltrimethoxysilane and water/iso-propyl alcohol was used as dispersion medium of colloidal silica) as described in Reference Example 2, below.

Polysiloxanes 1 and 2 were dissolved in toluene to obtain solutions with a concentration of 30g/100 mL, and in the same manner polysiloxanes 3 and 4 were dissolved in methylisobutyl ketone and a solution of water/iso-propyl alcohol respectively to obtain a solution with a concentration of 30g/100 mL.

### Example 1

Either anatase-type titanium oxide, TiO₂ (average particle size: approximately 15 nm; surface treated to block OH groups; bandgap energy: 3.2 eV; excitation wavelength: 385 nm), or strontium titanate, SrTiO₃ (particles with an average particle size in the range of from 20 nm to 60 nm, obtained by classification; bandgap energy: 3.2 eV; excitation wavelength: 385 nm), were added thereto independently as the n-type optical semiconductor particles in an amount of 2 parts by weight per 100 parts by weight of the polysiloxane, and then ultrasonically mixed and dispersed therein. The dispersion was applied to a glass substrate and dried in a hot-air drier at 40°C to remove the solvent and moisture. The glass substrate was placed on the bottom of a Pyrex glass container and a water filter formed from Pyrex glasses and water present therebetween, which cuts off light with wavelength shorter than 300 nm and light with wavelengths longer than 400 nm was installed in the container. The Pyrex glass container was placed in a water bath equipped with a cooling system and the sample on the glass substrate was irradiated for 6 minutes through the aforementioned filter with light from an Hg-Xe 200W lamp (UMX-200YA from Yamashita Denso Corp.). In this manner, the aforementioned sample was irradiated with light with a wavelength in the range of from 300 nm to 400 nm. In addition, a thermocouple was installed on the glass substrate to control the temperature during irradiation with light so as to prevent it from exceeding 25°C.

The amount of silanol groups in the polysiloxanes cured by irradiation with light in this manner was measured using infrared absorption spectra. Then, to determine the reduction in the amount of silanol groups due to curing by irradiation with light, a difference was obtained by subtracting therefrom the amount of silanol groups in each polysiloxane prior to curing as measured using infrared absorption spectra.

In addition, for reference purposes, the amount of silanol groups was measured in the same manner for each polysiloxane (containing no n-type optical semiconductor particles) cured by heating at 150°C. Then, to obtain a reduction in the amount of silanol groups caused by heat curing, a difference was obtained by subtracting therefrom the amount of silanol groups measured using infrared absorption spectra for each polysiloxane prior to curing. The ratios of the reduction in the amount of silanol groups in the polysiloxane cured by means of the above-described irradiation with light (where the reduction in the amount of silanol groups in the case used for reference was taken to be 100 % ) are shown hereinbelow as the degree of curing (%).

Furthermore, the transmittance of light at 400 nm was measured for each polysiloxane cured by irradiation with light or heating. The results are shown below.

(When using anatase-type TiO₂ as the n-type optical semiconductor particles)
1. Polymethylsiloxane (degree of curing: 43%, transmittance: 78%)
2. Polyphenylsiloxane (degree of curing: 37%, transmittance: 78%)
3. Polymethyl/dimethylsiloxane (degree of curing: 67%, transmittance; 78%)

(When using SrTiO₃ as the n-type optical semiconductor particles)
1. Polymethylsiloxane (degree of curing: 43%, transmittance: 77%)
2. Polyphenylsiloxane (degree of curing: 55%, transmittance: 76%)

### Example 2

To those solutions of various polysiloxanes prepared above, n-type optical semiconductor particles shown in Table 1 were added in amount of 5 % by weight per the polysiloxane in the solutions. The coating solutions produced were coated onto glass substrates and dried in a hot-air drier at 30°C to remove the organic solvents and moisture and obtain test samples.

The coated glass substrate was placed on the bottom of a Pyrex glass container, and a water filter formed from Pyrex glass plates and water present therebetween to cut off IR radiation and light with wavelength shorter than 300 nm was installed in the glass container. The Pyrex glass container was placed in a water bath equipped with a cooling system, and the test sample on the glass substrate was irradiated with light with wavelength of 300 nm to 400 nm from an Hg-Xe 200 W lamp (UMX-200 YA from Yamashita Denso Corp.) through the aforementioned water filter for 12 minutes. In addition a thermocouple was installed on the glass substrate to control the temperature below 25°C during the irradiation with light.

**Table 1**

| N-Type Optical Semiconductor | | Bandgap Energy | Excited Wavelength |
|---|---|---|---|
| TiO₂ (2) | Anatase type TiO₂ (2): Average particle size about 15 nm: OH on the surface was blocked. | 3.2 eV | 385 nm |
| TiO₂(1) | Anatase type TiO₂(1): Average particle size about 15 nm | 3.2 eV | 385 nm |
| SnO₂ | Average particle size of 70 nm or less obtained by classification | 3.7 eV | 335 nm |
| SiC | Average particle size of about 15 nm | 2.4 eV | 520 nm |

Degree of cross-linking with irradiation of light was calculated as follows:
(1) An absorption intensity of infrared spectrum corresponding to OH group in the coating film of polysiloxane cured with the irradiation for 12 minutes was measured.
(2) An absorption intensity of infrared spectrum corresponding to OH group in the coating film, in which the same polysiloxane was coated onto a glass substrate and after dried in a hot-air drier at 30°C, was cured at 150°C. for 15 hours, was measured.
(3) Assuming that the latter absorption intensity (2) when cured by heating is 100, the former absorption intensity (1) when cured with irradiation of light is determined to be degree (unit: %) of cross-linking with irradiation of light.

The results are shown in Table 2.

**Table 2**

| Polysiloxane | N-Type Semiconductor Particle | Degree of Cross-linking (%) |
|---|---|---|
| No. 1 | TiO₂(1) | 43 |
| | SiC | 30 |
| No. 2 | TiO₂(1) | 37 |
| | TiO₂ (2) | 50 |
| | SiC | 80 |
| | SnO₂ | 20 |
| No. 3 | TiO₂ (1) | 67 |
| | TiO₂ (2) | 35 |
| | SiC | 80 |
| | SnO₂ | 33 |
| No. 4 | TiO₂ (1) | 33 |
| | TiO₂ (2) | 21 |
| | SiC | 40 |
| | SnO₂ | 50 |

Reference Example 1. (Example 1 of Japanese Laid-Open Patent Application No. Hei 11(1999) -021353). 160 mL of water and 120 mL of methylisobutyl ketone were placed in a reactor vessel equipped with a reflux cooling pipe, a dropping funnel, and an agitator, subjected to vigorous agitation to prevent separation into two layers, and placed in an ice bath. When the temperature of the mixture in the reactor vessel reached 15°C, a solution obtained by dissolving 51.6g (0.345 mol) of methyltrichlorosilane and 7.85g (0.0608 mol) of dimethyldichlorosilane in 40 mL of methylisobutyl ketone was slowly added thereto in a dropwise manner through the dropping funnel. At the same time, the temperature of the reaction mixture was raised to 28°C. After termination of the dropwise addition, the reaction mixture was mixed under heating in an oil bath at 60°C for 2 hours. After termination of the reaction, the organic layer was washed until the wash rinse became neutral, whereupon the organic layer was dried using a drying agent. After removing the drying agent, the solvent was removed under reduced pressure and vacuum drying was carried out for two days, to produce solid white silicone resin. Examination of the molecular weight distribution of the silicone resin using GPC (using the HLC-8020 analyzer from Tosoh Corp. with a TSKgelGMH_{IL}-L+G1000H_{IL} (trade mark) column from Tosoh Corp. and toluene as the solvent) revealed that the weight-average molecular weight, determined using a polystyrene standard, was 4830 and the number-average molecular weight was 1230. In addition, in the resultant silicone resin whose structure is represented by the general formula {R₂Si(OH)O_{1/2}}ₐ{R₂SiO_{2/2}}_{b}{RSi(OH)O_{2/2}}_{c}{RSiO_{3/2}}_{d} (in which R stands for methyl), the mole ratio of diorganosiloxy units to monoorganosiloxy units, in other words, the value of (a+b)/(c+d), as determined based on ²⁹Si NMR spectra (measured using the ACP-300 from Bruker Instruments, Inc.), was 0.21, and the molar content of silanol per 1 mol of silicon in the monoorganosiloxy units (polyorganosilsesquioxane structure), in other words, the value of c/(c+d), was 0.180. The molar content of silanol per 1 mol of silicon in the diorganosiloxy units, in other words, the value of a/(a+b), was 0.058.

### Reference Example 2

0.2 g. of Glacial acetic acid was added to 200 g of dispersion comprising a commercially available colloidal silica containing 34 % of SiO₂ with particle size of about 15 nm and having the initial pH of 3.1 and Na₂O content of less than 0.01 % by weight and as dispersion medium water/iso-propyl alcohol solution at the volume ratio of 50/50.Under agitation 138 g of methyltriethoxysilane was added to the dispersion containing said acid added to form ethanol and methyltrisilanol. After standing for about one hour, the composition was stabilized at the pH of 4.5.

## Claims

1. A method for photocuring a polysiloxane comprising mixing n-type optical semiconductor particles with a polysiloxane which is cross-linkable by a condensation reaction between silanol groups and cross-linking the polysiloxane by irradiating with light possessing energy equal to or greater than the bandgap energy of the optical semiconductor particles.

2. A method according to claim 1, wherein the polysiloxane is a silicone resin.

3. A method according to claim 1 or claim 2, wherein the n-type optical semiconductor particles are selected from the group consisting of SnO₂, ZnO, SrTiO₃, and anatase-type TiO₂.

4. A method according to any of claims 1 to 3, wherein the average particle size of the n-type optical semiconductor particles is from 10 nm to 80 nm.

5. A method according to any of claims 1 to 4, wherein the polysiloxane has a content of OH groups in the range of from 0.1 wt% to 10 wt%.

6. A product produced in accordance with the method of Claim 1.

7. A method for making a cured polysiloxane composition for optical use having no specific light absorption band in the visible light range comprising mixing n-type optical semiconductor particles having a bandgap energy corresponding to the energy of light with a wavelength shorter than 400 nm with a polysiloxane cross-linkable by a condensation reaction between silanol groups and cross-linking the polysiloxane by irradiating with light of energy equal to or greater than the bandgap energy of the optical semiconductor particles.

8. A method according to claim 7, wherein the polysiloxane is a silicone resin.

9. A method according to claim 7 or claim 8, wherein the n-type optical semiconductor particles are selected from the group consisting of SnO₂, ZnO, SrTiO₃, and anatase-type TiO₂.

10. A method according to any of claims 7 to 9, in which the average particle size of the n-type optical semiconductor particles is in the range of from 10 nm to 80 nm.

11. A method according to claim 7, in which the polysiloxane has a content of OH groups in the range of from 0.1 wt% to 10 wt%.

12. A product produced in accordance with method of Claim 7.
